# EUROPÄISCHE PATENTSCHRIFT

(11) **EP 0 913 912 B1**
(45) Veröffentlichungstag und Bekanntmachung des Hinweises auf die Patenterteilung: **27.02.2002**
(21) Anmeldenummer: 98117223.2
(22) Anmeldetag: 11.09.1998
(51) Int. Cl.: H02K 15/00

(54) **Verfahren zur Reparatur von Blechpaketen einer elektrischen Maschine**
Method of repairing packets of laminations of an electrical machine
Procédé de réparation de paquets de tôles d'une machine électrique

(30) Priorität: 30.10.1997 DE 19747968
(43) Veröffentlichungstag der Anmeldung: 06.05.1999
(73) Patentinhaber: ABB PATENT GmbH, 68309 Mannheim (DE)
(72) Erfinder: Runck, Werner Dr.-Ing., 67098 Bad Dürkheim (DE); Scherf, Gunter Dipl.-Ing., 67229 Laumersheim (DE)
(74) Vertreter: Dreiss, Fuhlendorf, Steimle & Becker

(56) Entgegenhaltungen:
- EP-A- 0 790 278
- US-A- 5 174 011

## Beschreibung

Die Erfindung betrifft ein Verfahren zur Reparatur von Warmstellen in aus geschichteten und gegeneinander isolierten Einzelblechen gebildeten Blechpaketen einer elektrischen Maschine, insbesondere Turbogenerator, wobei die Warmstellen in den Blechpaketen wegen unzureichender Isolierung der Einzelbleche infolge des magnetischen Flusses entstehen und aus den Blechpaketen mechanisch herausgearbeitet werden, wobei die hierdurch entstandenen Ausnehmungen jeweils mittels einer an die Kontur der Ausnehmung angepaßten Prothese ausgefüllt werden.

Es ist bekannt, daß die Blechpakete zumindest größerer elektrischer Maschinen aus geschichteten und gegeneinander isolierten Einzelblechen gebildet werden, welche im Betrieb der elektrischen Maschine vom magnetischen Fluß durchsetzt sind.

Bei der Herstellung der Blechpakete, besonders aber durch Lockerungen des Blechpakets im Betrieb, ist es nicht auszuschließen, daß örtlich die Isolierung schadhaft oder zumindest unzureichend ist. An diesen als Warmstellen bezeichneten Orten konzentriert sich der magnetische Fluß und führt hierdurch zu sehr hohen örtlichen Erwärmungen. Sofern es sich um kleinere Warmstellen, das heißt lokal begrenzte Bereiche, handelt, kann durch Erneuerung der Isolierung dieses Problem behoben werden.

Bei größeren Warmstellen wird üblicherweise der betroffene Bereich im Blechpaket mechanisch herausgearbeitet und die hierdurch gebildete Ausnehmung mit einer Prothese aus Kunststoff aufgefüllt, so daß anschließend die ursprüngliche Kontur des Blechpaketes wiederhergestellt ist.

Hierbei wird in Kauf genommen, daß der magnetische Fluß nur zu einem geringen Anteil den Kunststoffeinsatz durchsetzt, das bedeutet, daß in den benachbarten von Eisen gebildeten Bereiche ein höherer magnetischer Fluß auftritt, wodurch hohe Verluste entstehen und infolgedessen zu hohen örtlichen Temperaturen führt.

Ausgehend von diesem Stand der Technik ist es Aufgabe der Erfindung ein Verfahren zur Reparatur von Warmstellen in Blechpaketen der eingangs genannten Art anzugeben, das einfach durchführbar ist und mit vergleichsweise geringem Aufwand die ungünstige örtliche Erwärmung verhindert.

Diese Aufgabe wird erfindungsgemäß gelöst durch die kennzeichnenden Merkmale des Anspruchs 1. Weitere vorteilhaften Ausgestaltungen und Weiterbildungen der Erfindung sind in den Unteransprüchen gekennzeichnet.

Entsprechend der Erfindung ist daher vorgesehen, daß die zum Ausfüllen vorgesehene Prothese aus einem mit Eisenpartikeln durchsetzten Kunststoff gefertigt wird.

Hierbei ist in Weiterbildung vorgesehen, daß als Kunststoff ein wärmebeständiger Kunststoff verwendet wird. Dieser kann entsprechend einer bevorzugten Ausführungsform im flüssigen Zustand oder gemäß einer alternativen Ausgestaltung in globularer Form, das heißt pulver- oder partikelförmig, in die betreffende Ausnehmung eingebracht und darin mittels Wärmezufuhr ausgehärtet werden.

Gemäß einer alternativen Lösung der der Erfindung zugrundeliegenden Aufgabe kann vorgesehen sein, daß die betreffende Warmstelle, die entsprechend ihrer Ausdehnung gemäß einer vorgegebenen Geometrie mechanisch, zum Beispiel mittels Fräsen, aus dem Blechpaket herausgearbeitet wird, mit einer aus geschichteten und gegeneinander isolierten Blechabschnitten gebildeten Prothese ausgefüllt wird.

Der möglicherweise vorhandene Luftspalt zwischen dem Blechpaket und der Blechprothese kann im Vergleich mit der bisher verwendeten reinen Kunststoffprothese vernachlässigt werden. Im übrigen kann durch Einhaltung der vorgegebenen Fertigungsparameter und Toleranzen eine derart enge Passung erreicht werden, daß der Luftspalt sich kaum oder gar nicht auf den magnetischen Fluß auswirkt.

Hierbei erweist es sich in Weiterbildung des erfindungsgemäßen Verfahrens als vorteilhaft, wenn der zum Ausfüllen der Ausnehmung im Blechpaket vorgesehene Einsatz in die Ausnehmung eingepaßt wird.

In weiterer Ausgestaltung des erfindungsgemäßen Verfahrens wird der aus Kunststoff oder aus Blechabschnitten gebildete Einsatzkörper als formangepaßter Block in die betreffende Ausnehmung eingebracht und darin mittels Klebstoff befestigt.

Eine weitere Aufgabe der Erfindung besteht darin, eine elektrische Maschine, insbesondere einen Turbogenerator, zur Anwendung des erfindungsgemäßen Verfahrens anzugeben.

Eine derartige bekannte elektrische Maschine ist mit Blechpaketen versehen, die aus geschichteten, gegeneinander isolierten Blechen gebildet sind, wobei infolge unzureichender Isolierung entstandene Warmstellen in den Blechpaketen herausgearbeitet sind und die hierdurch gebildeten Ausnehmungen jeweils mittels einer Prothese ausgefüllt sind. Hierbei ist allgemein bekannt, die Prothese aus Kunststoff anzufertigen.

Dabei bewirkt der im Hinblick auf den magnetischen Fluß nichtleitende Kunststoff ebenfalls unerwünschte Temperaturerhöhungen der angrenzenden Bereiche, weil der Magnetfluß auf die angrenzenden Bereiche abgedrängt wird, wo er sich verdichtet und zu unerwünschten örtlichen Erwärmungen führt.

Als Lösung dieses Problems ist erfindungsgemäß vorgesehen, daß die Prothese aus mit Eisenpartikeln durchsetztem Kunststoff gebildet ist, wobei die Eisenpartikel quasi als Leiter für den magnetischen Fluß dienen. Hiermit wird erreicht, daß der magnetische Fluß auch die Prothese durchsetzt, so daß die angrenzenden Regionen temperaturbezogen nicht mehr höher beansprucht werden.

Von Vorteil ist es hierbei, wenn die Eisenpartikel im Kunststoff gleichmäßig verteilt sind. Gemäß einer bevorzugten Ausgestaltung der Erfindung umfassen die im Kunststoff enthaltenen Eisenpartikel einen Volumenanteil von wenigstens 50%.

Entsprechend einer vorteilhaften Ausführungsform der Erfindung ist zur Bildung des möglichst paßgenauen Einsatzes ein wärmebeständiger Kunststoff, vorzugsweise ein wärmebeständiges Harz vorgesehen, zum Beispiel Epoxydharz oder Polyesterharz.

Entsprechend einer günstigen Weiterbildung der Erfindung ist ein vorgeformter Körper aus mit Eisenpartikeln durchsetztem Kunststoff vorgesehen, der in die betreffende Ausnehmung eingesetzt ist.

Gemäß einer alternativen Lösung kann vorgesehen sein, daß die betreffende Warmstelle, die entsprechend ihrer Ausdehnung gemäß einer vorgegebenen Geometrie mechanisch, zum Beispiel mittels Fräsen, aus dem Blechpaket herausgearbeitet wird und mit einer aus geschichteten und gegeneinander isolierten Blechabschnitten gebildeten Prothese ausgefüllt wird.

Der möglicherweise vorhandene Luftspalt zwischen dem Blechpaket und der Blechprothese kann im Vergleich mit der bisher verwendeten reinen Kunststoffprothese vernachlässigt werden. Im übrigen kann durch Einhaltung der vorgegebenen Fertigungsparameter und Toleranzen eine derart enge Passung erreicht werden, daß der Luftspalt sich kaum oder gar nicht auf den magnetischen Fluß auswirkt, so daß die hierdurch verursachte Erwärmung unterbleibt.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

Es zeigen:
- Fig. 1: eine ausschnittsweise Schrägansicht eines Blechpaketes mit einer Ausnehmung an einer Warmstelle
und
- Fig. 2: die Anordnung gemäß Fig. 1 mit eingesetztem Einsatzkörper.

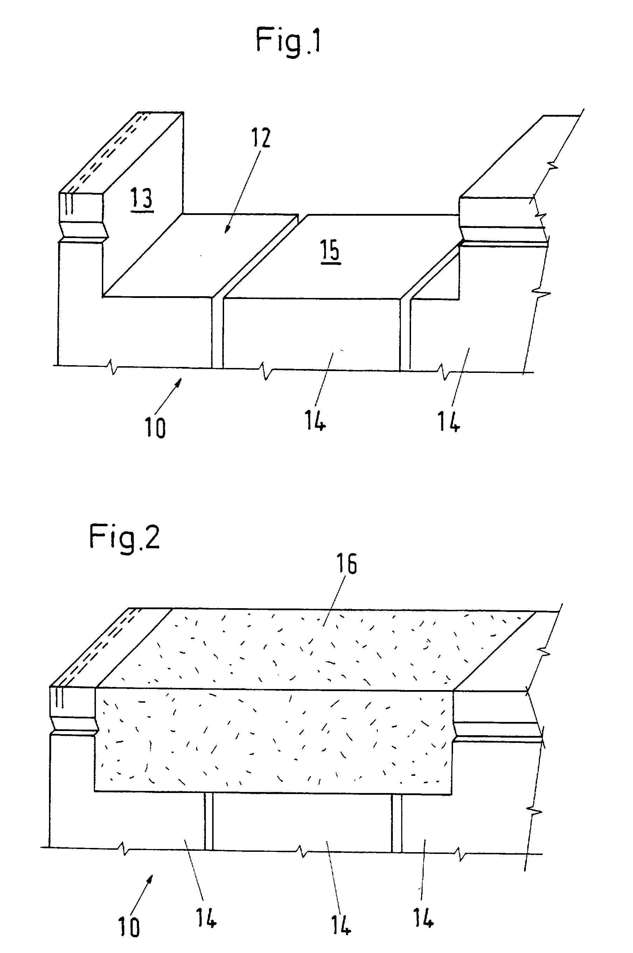

In Fig. 1 ist in ausschnittweiser Darstellung eine Schrägansicht eines Blechpaketes 10 mit einer Ausnehmung 12 gezeigt, die an einer zuvor festgestellten Warmstelle aus dem Blechpaket herausgearbeitet worden ist.

In dieser Darstellung sind einzelne, das Blechpaket bildende Segmente 14 gezeigt, die aus einzelnen aufeinander geschichteten Blechen gebildet sind. Nicht gezeigt ist die Schichtung der gegeneinander isolierten Einzelbleche selbst.

Anhand der in Fig. 1 gezeigten Darstellung ist leicht nachvollziehbar, daß der von der Ausnehmung 12 gebildete Luftraum für den Magnetfluß einen derart hohen Widerstand darstellt, daß es zu einer Verdichtung der Feldlinien im Bereich der an diesen Luftraum angrenzenden Blechsegmente 14 des Blechpaketes 10 und damit zu einer ungewollten Erwärmung kommt.

An diesem Zustand ändert sich auch nichts, wenn, wie in Fig. 2 dargestellt, die Ausnehmung mit einem magnetisch nicht aktiven Kunststoff ausgefüllt ist. Die herkömmlichen, zu diesem Zweck bisher eingesetzten Kunststoffe besitzen eine Permeabilität, die weitgehend der von Luft entspricht, so daß hiermit in magnetischem Hinblick der Kunststoffeinsatz keine Verbesserung gegenüber dem nicht gefüllten Zustand der Ausnehmung erreicht wird.

Erst unter Anwendung der Erfindung, gemäß welcher ein Einsatz 16 mit magnetisch aktiven Eisenpartikeln angereichert beziehungsweise gemäß der alternativen Lösung von isolierten Blechabschnitten gebildet ist, entsteht eine den magnetischen Fluß leitende Verbindung zwischen den beiden Stirnflächen 13 der Ausnehmung 12 sowie mit den Deckflächen 15 des abgearbeiteten Blechkörpers 14.

## Patentansprüche

1. Verfahren zur Reparatur von Warmstellen in aus geschichteten und gegeneinander isolierten Einzelblechen gebildeten Blechpaketen (10) einer elektrischen Maschine, insbesondere Turbogenerator, wobei die Warmstellen in den Blechpaketen (10) wegen unzureichender Isolierung der Einzelbleche infolge des magnetischen Flusses entstehen und aus den Blechpaketen (10) mechanisch herausgearbeitet werden, wobei die hierdurch entstandenen Ausnehmungen (12) jeweils mittels einer an die Kontur der Ausnehmung (12) angepaßten Prothese (16) ausgefüllt werden, **dadurch gekennzeichnet, daß** die zum Ausfüllen vorgesehene Prothese (16) aus einem vorher mit Eisenpartikeln vermischten Kunststoff gefertigt wird.

2. Verfahren nach Anspruch 1, **dadurch gekennzeichnet, daß** als Kunststoff ein wärmebeständiger Kunststoff verwendet wird.

3. Verfahren nach einem der vorherigen Ansprüche, **dadurch gekennzeichnet, daß** der Kunststoff im flüssigen Zustand in die betreffende Ausnehmung (12) eingebracht und darin ausgehärtet wird.

4. Verfahren nach einem der Ansprüche 1 oder 2, **dadurch gekennzeichnet, daß** der Kunststoff in globularer Form in die betreffende Ausnehmung (12) eingebracht und darin mittels Wärmezufuhr ausgehärtet wird.

5. Verfahren nach Anspruch 1, **dadurch gekennzeichnet, daß** zum Ausfüllen der betreffenden Ausnehmung (12) im Blechpaket (10) ein aus geschichteten und gegeneinander isolierten, aus Einzelblechen hergestellten Blechabschnitten gebildeter formangepaßter Einsatz hergestellt und in die Ausnehmung (12) eingesetzt wird.

6. Verfahren nach Anspruch 5, **dadurch gekennzeichnet, daß** der zum Ausfüllen der Ausnehmung im Blechpaket (10) vorgesehene Einsatz in die Ausnehmung (12) eingepaßt wird.

7. Verfahren nach einem der vorherigen Ansprüche, **dadurch gekennzeichnet, daß** der aus Kunststoff oder aus Blechabschnitten gebildete Einsatzkörper als formangepaßter Block in die betreffende Ausnehmung (12) eingebracht und darin mittels Klebstoff befestigt wird.

8. Elektrische Maschine, insbesondere Turbogenerator, zur Anwendung des Verfahrens gemäß den Ansprüchen 1 bis 7 mit Blechpaketen (10), die aus geschichteten, gegeneinander isolierten Blechen gebildet sind, wobei infolge unzureichender Isolierung entstandene Warmstellen in den Blechpaketen (10) herausgearbeitet sind und die hierdurch gebildeten Ausnehmungen jeweils mittels einer Prothese (16) ausgefüllt sind, **dadurch gekennzeichnet, daß** die Prothese (16) aus mit Eisenpartikeln durchsetztem Kunststoff gebildet ist.

9. Elektrische Maschine nach Anspruch 8, **dadurch gekennzeichnet, daß** die Eisenpartikel im Kunststoff gleichmäßig verteilt sind.

10. Elektrische Maschine nach einem der Ansprüche 8 oder 9, **dadurch gekennzeichnet, daß** die im Kunststoff enthaltenen Eisenpartikel einen Volumenanteil von wenigstens 50% umfassen.

11. Elektrische Maschine nach einem der Ansprüche 8 bis 10, **dadurch gekennzeichnet, daß** ein wärmebeständiger Kunststoff, vorzugsweise ein Copolymer vorgesehen ist.

12. Elektrische Maschine nach Anspruch 11, **dadurch gekennzeichnet, daß** als Kunststoff Acrylnitril-Butadien-Styrol (ABS) vorgesehen ist.

13. Elektrische Maschine nach einem der Ansprüche 8 bis 12, **dadurch gekennzeichnet, daß** ein vorgeformter Körper aus mit Eisenpartikeln durchsetztem Kunststoff in die betreffende Ausnehmung (12) eingesetzt ist.

14. Elektrische Maschine, insbesondere Turbogenerator, zur Anwendung des Verfahrens gemäß den Ansprüchen 1 bis 7 mit Blechpaketen (10), die aus geschichteten, gegeneinander isolierten Blechen gebildet sind, wobei infolge unzureichender Isolierung entstandene Warmstellen in den Blechpaketen (10) herausgearbeitet sind und die hierdurch gebildeten Ausnehmungen jeweils mittels einer Prothese (16) ausgefüllt sind, **dadurch gekennzeichnet, daß** zum Ausfüllen der betreffenden Ausnehmung (12) im Blechpaket (10) ein aus geschichteten und gegeneinander isolierten und aus Einzelblechen hergestellten Blechabschnitten gebildeter formangepaßter Einsatz vorgesehen ist, der in die Ausnehmung (12) eingesetzt ist.

## Claims

1. Process for repairing heat spots in laminated cores (10) made of laminated individual sheets which are insulated from one another of an electrical machine, in particular turbogenerator, the heat spots in the laminated cores (10) occurring as a result of insufficient insulation of the individual sheets owing to the magnetic flow and being worked mechanically from the laminated cores (10), the recesses (12) occurring as a result each being filled by means of a prosthesis (16) adapted to the contour of the recess (12), **characterised in that** the prosthesis (16) provided for the purpose of filling is manufactured from a plastics material premixed with iron particles.

2. Process according to claim 1, **characterised in that** a heat-resistant plastics material is used as plastics material.

3. Process according to any of the preceding claims, **characterised in that** the plastics material is introduced in the fluid state into the relevant recess (12) and is cured therein.

4. Process according to any of claims 1 or 2, **characterised in that** the plastics material is introduced in globular form into the relevant recess (12) and cured therein by means of a supply of heat.

5. Process according to claim 1, **characterised in that** to fill the relevant recess (12) in the laminated core (10) an insert which is adapted in shape formed from laminated sheet portions which are insulated from one another and produced from individual sheets is produced and inserted into the recess (12).

6. Process according to claim 5, **characterised in that** the insert provided for the purpose of filling the recess in the laminated core (10) is fitted into the recess (12).

7. Process according to any of the preceding claims, **characterised in that** the insert formed from plastics material or from sheet portions is introduced into the relevant recess (12) as a block adapted in shape and is secured therein by means of glue.

8. Electrical machine, in particular turbogenerator, for the application of the process according to claims 1 to 7 with laminated cores (10) which are formed from laminated sheets which are insulated from one another, heat spots which have occurred in the laminated cores (10) owing to insufficient insulation being worked out and the recesses formed as a result each being filled by means of a prosthesis (16), **characterised in that** the prosthesis (16) is formed from plastics material permeated by iron particles.

9. Electrical machine according to claim 8, **characterised in that** the iron particles are uniformly distributed in the plastics material.

10. Electrical machine according to any of claims 8 or 9, **characterised in that** the iron particles contained in the plastics material comprise a percentage by volume of at least 50%.

11. Electrical machine according to any of claims 8 to 10, **characterised in that** a heat-resistant plastics material, preferably a copolymer, is provided.

12. Electrical machine according to claim 11, **characterised in that** acrylonitrile-butadene-styrene (ABS) is provided as plastics material.

13. Electrical machine according to any of claims 8 to 12, **characterised in that** a pre-shaped element made of plastics material permeated by iron particles is inserted into the relevant recess (12).

14. Electrical machine, in particular turbogenerator, for the application of the process according to claims 1 to 7 with laminated cores (10) which are formed from laminated sheets which are insulated from one another, heat spots in the laminated cores (10) which have occurred owing to insufficient insulation being worked out and the recesses which have formed as a result each being filled by means of a prosthesis (16), **characterised in that** for the purpose of filling the relevant recess (12) in the laminated core (10) an insert which has been adapted in shape formed from laminated sheet portions which are insulated from one another and produced from individual sheets is provided, which insert is inserted into the recess (12).

## Revendications

1. Procédé de réparation des zones de chaleur dans des empilages de tôles (10), formés par des plaques de métal individuelles superposées et isolées les unes des autres, dans une machine de production d'électricité, en particulier un turboalternateur, sachant que les zones de chaleur dans les empilages de tôles (10) sont formées à la suite d'une isolation insuffisante des plaques de métal individuelles, due au flux magnétique, et sont découpées mécaniquement hors des empilages de tôles (10), les cavités (12) ainsi obtenues étant comblées chacune au moyen d'une prothèse (16) adaptée au contour de la cavité (12), **caractérisé en ce que** la prothèse (16) prévue pour combler lesdites cavités est réalisée dans une matière plastique mélangée au préalable avec des particules de fer.

2. Procédé selon la revendication 1, **caractérisé en ce que** la matière plastique utilisée est une matière plastique résistante à la chaleur.

3. Procédé selon l'une des revendications précédentes, **caractérisé en ce que** la matière plastique est introduite à l'état liquide dans la cavité (12) concernée et est durcie dans celle-ci.

4. Procédé selon la revendication 1 ou 2, **caractérisé en ce que** la matière plastique est introduite sous forme globulaire dans la cavité (12) concernée et est durcie dans celle-ci.

5. Procédé selon la revendication 1, **caractérisé en ce que**, pour combler la cavité (12) concernée dans l'empilage de tôles (10), il est prévu de fabriquer un insert adapté à la forme de ladite cavité, formé dans des portions de plaques de métal fabriquées à partir de plaques individuelles empilées et isolées les unes par rapport aux autres, et ledit insert est introduit dans la cavité (12).

6. Procédé selon la revendication 5, **caractérisé en ce que** l'insert, prévu pour combler la cavité dans l'empilage de tôles (10), est ajusté dans la cavité (12).

7. Procédé selon l'une des revendications précédentes, **caractérisé en ce que** l'insert forme en matière plastique ou dans des portions de plaques de métal est inséré dans la cavité (12) concernée sous forme de bloc adapté à la forme de ladite cavité et est fixé dans celle-ci au moyen d'une colle.

8. Machine de production d'électricité, en particulier turboalternateur, destiné à l'application du procédé selon les revendications 1 à 7, comprenant des empilages de tôles (10), qui sont formés par des plaques de métal individuelles superposées et isolées les unes des autres, sachant que des zones de chaleur formées à la suite d'une isolation insuffisante sont découpées dans les empilages de tôles (10) et les cavités ainsi obtenues sont comblées chacune par une prothèse (16), **caractérisée en ce que** la prothèse (16) est formée par une matière plastique entremêlée de particules de fer.

9. Machine de production d'électricité selon la revendication 8, **caractérisée en ce que** les particules de fer sont régulièrement réparties dans la matière plastique.

10. Machine de production d'électricité selon la revendication 8 ou 9, **caractérisée en ce que** les particules de fer contenues dans la matière plastique représentent au moins 50 % du volume total.

11. Machine de production d'électricité selon l'une quelconque des revendications 8 à 10, **caractérisée en ce qu'**il est prévu d'utiliser une matière plastique résistante à la chaleur, de préférence un copolymère.

12. Machine de production d' électricité selon la revendication 11, **caractérisée en ce que** la matière plastique prévue est un copolymère acrylonitrile-styrène-butadiène (ABS).

13. Machine de production d'électricité selon l'une quelconque des revendications 8 à 12, **caractérisée en ce qu'**un corps préformé en matière plastique entremêlée de particules de fer est inséré dans la cavité (12) concernée.

14. Machine de production d'électricité, en particulier turboalternateur, destiné à l'application du procédé selon les revendications 1 à 7, comprenant des empilages de tôles (10), qui sont formés par des plaques de métal individuelles superposées et isolées les unes des autres, sachant que des zones de chaleur formées à la suite d'une isolation insuffisante sont découpées dans les empilages de tôles (10) et les cavités ainsi obtenues sont comblées chacune par une prothèse (16), **caractérisée en ce que**, pour combler la cavité (12) concernée dans l'empilage de tôles (10), il est prévu un insert adapté à la forme de ladite cavité, formé dans des portions de plaques de métal fabriquées à partir de plaques individuelles empilées et isolées les unes par rapport aux autres, lequel est introduit dans la cavité (12).
